# EUROPÄISCHE PATENTSCHRIFT

(11) **EP 3 842 325 B1**
(45) Veröffentlichungstag und Bekanntmachung des Hinweises auf die Patenterteilung: **16.08.2023**
(21) Anmeldenummer: 20203956.6
(22) Anmeldetag: 26.10.2020
(51) Int. Cl.: B62D 55/26, B62D 55/253

(54) **KETTENSTEG FÜR EIN KETTENFAHRZEUG UND VERFAHREN ZUR HERSTELLUNG EINES SOLCHEN KETTENSTEGES**
CHAIN LINK FOR A TRACKED VEHICLE AND METHOD FOR MANUFACTURING SUCH A LINK
ÉTANÇON POUR UN VÉHICULE À CHENILLES ET PROCÉDÉ DE FABRICATION D'UN TEL ÉTANÇON

(30) Priorität: 23.12.2019 DE 102019220532
(43) Veröffentlichungstag der Anmeldung: 30.06.2021
(73) Patentinhaber: Kässbohrer Geländefahrzeug AG, 88471 Laupheim (DE)
(72) Erfinder: Junginger, Bernd, 89134 Blaustein-Bermaringen (DE); Cornely, Timo, 88437 Maselheim (DE)
(74) Vertreter: Patentanwälte Ruff, Wilhelm, Beier, Dauster & Partner mbB

(56) Entgegenhaltungen:
- WO-A1-2017/187382
- WO-A1-2018/060884
- AT-B- 327 705
- DE-A1- 10 110 580

## Beschreibung

Die Erfindung betrifft einen Kettensteg für ein Kettenfahrzeug, insbesondere eine Pistenraupe, nach dem Oberbegriff des Anspruchs 1. Die Erfindung betrifft zudem ein Verfahren zur Herstellung eines derartigen Kettensteges.

Die DE 101 10 580 A1 offenbart für eine Kette eines Kettenfahrzeugs ein Steghohlprofil, das außenseitig durch eine Gummi- oder Kunststoffummantelung umgeben ist.

In der WO 2018/060884 A1 ist ein Kettenstegprofil gezeigt, das mit einer Kunststofffüllmasse ausgekleidet ist, um ein Eindringen von Wasser, Schnee oder Eis in das Innere des Kettenstegprofils zu vermeiden.

Die AT 327 705 offenbart einen Kettensteg, in den eine Klemmleiste lose eingeschoben ist, die dazu dient, über Schraubverbindungen eine Gegenplatte relativ zu entsprechenden Kettenbändern zu fixieren.

Die WO 2017/187382 A1 offenbart einen Kettensteg, auf den außenseitig Polymerplatten aufgeklebt sind, die das Anhaften von Schnee und Eis auf dem Kettenstegmaterial verhindern sollen.

Ein weiterer Kettensteg für ein Kettenlaufwerk einer Pistenraupe ist aus der DE 10 2015 206 775 A1 bekannt. Der bekannte Kettensteg weist ein Steghohlprofil auf. Das Steghohlprofil weist Befestigungsaufnahmen zur Befestigung eines Spurbügels auf. Zudem ist das Steghohlprofil mit Befestigungsaufnahmen zur Verbindung des Steghohlprofils mit Kettenbändern der Laufwerkskette versehen.

Aufgabe der Erfindung ist es, einen Kettensteg der eingangs genannten Art zu schaffen, der ein geringes Gewicht und dennoch eine hohe Steifigkeit aufweist. Zudem ist es die Aufgabe der Erfindung, eine einfache Herstellung eines derartigen Kettensteges zu ermöglichen.

Diese Aufgabe wird durch die Merkmale des Anspruchs 1. Durch die erfindungsgemäße Lösung wird für den Kettensteg eine hohe Steifigkeit bei dennoch vergleichsweise geringem Gewicht erzielt. Denn vorzugsweise ist das Steghohlprofil aus einem leichtgewichtigen Material hergestellt und das Versteifungsprofil aus einem steifen, vergleichsweise schweren Material. Die Integration des Versteifungsprofils in das Steghohlprofil gewährleistet für den so gebildeten Kettensteg eine hohe Steifigkeit. Durch die Integration des Versteifungsprofiles in das Steghohlprofil erhöhen sich für den so gebildeten, gesamten Kettensteg zum einen ein Widerstandsmoment und zum anderen das Elastizitätsmodul dieses Kettensteges. Die erfindungsgemäße Lösung eignet sich sowohl für Kettenfahrzeuge in Form von Arbeitsfahrzeugen für schwer zugängliches Gelände als auch für Pistenraupen. Je nach Einsatzzweck sind die Kettenstege mit einer metallischen Oberfläche (für den Winterbetrieb auf Schnee) oder mit einer gummierten und profilierten Lauffläche (für steinigen Untergrund) versehen. Erfindungsgemäß weist das Versteifungsprofil eine auf eine Innenkontur des Steghohlprofils derart abgestimmte Außenkontur auf, dass das Versteifungsprofil mit seiner Außenkontur zumindest weitgehend flächig an der Innenkontur des Steghohlprofils anliegt. Das Versteifungsprofil bildet demzufolge eine weitgehend flächige Stützung des Steghohlprofils.

Erfindungsgemäß ist das Versteifungsprofil mit dem Steghohlprofil verpresst. Hierdurch wird eine hohe kraftschlüssige Verbindung zwischen dem Versteifungsprofil und dem Steghohlprofil erzielt, wodurch das Versteifungsprofil und das Steghohlprofil sich relativ zueinander wie ein einheitliches Bauteil verhalten.

In Ausgestaltung der Erfindung erstreckt das Versteifungsprofil sich über eine gesamte Länge des Steghohlprofils. Dadurch ist es möglich, das Steghohlprofil über seine gesamte Länge zu versteifen.

In weiterer Ausgestaltung der Erfindung ist das Versteifungsprofil als Hohlprofil, vorzugsweise aus einer Stahllegierung, hergestellt. Die Gestaltung des Versteifungsprofiles als Hohlprofil ermöglicht eine Gewichtsreduzierung für das Versteifungsprofil, ohne die Steifigkeit des Versteifungsprofiles erheblich zu reduzieren. Vorzugsweise ist das Hohlprofil ein geschlossenes Hohlprofil, dessen Mantel durchgängig über den gesamten Umfang geschlossen ist. Dies unterstützt die Steifigkeit des Versteifungsprofils und reduziert das Gewicht des Versteifungsprofils.

In weiterer Ausgestaltung der Erfindung sind ein Querschnitt des Versteifungsprofils und ein Querschnitt des Steghohlprofils jeweils vierkantförmig ausgeführt. Dadurch ergeben sich über jeweils vier einander zugewandte Flächen jeweils flächige Abstützungen relativ zueinander, die einen besonders guten Kraftfluss zwischen den aneinanderliegenden Flächen des Versteifungsprofiles und des Steghohlprofiles bewirken.

In weiterer Ausgestaltung der Erfindung ist das Steghohlprofil außenseitig mit einer Profilierung aus einem elastisch nachgiebigen Werkstoff, insbesondere einem Elastomer oder einem thermoplastischen Elastomer versehen. Diese Profilierung ist vorzugsweise auf die Außenseite des Steghohlprofiles aufvulkanisiert. Diese Ausgestaltung ist besonders vorteilhaft einsetzbar für Laufwerksketten von Kettenfahrzeugen, die auf steinigem Untergrund eingesetzt werden. Die Kettenstege sind somit im Bereich ihrer Lauffläche gummiert und profiliert.

Für das Verfahren wird die der Erfindung zugrunde liegende Aufgabe dadurch gelöst, dass ein Steghohlprofil erhitzt und ein Versteifungsprofil abgekühlt werden, und dass anschließend das gekühlte Versteifungsprofil axial in das erhitzte Steghohlprofil eingesteckt wird, wobei abschließend eine gemeinsame Temperaturangleichung des Steghohlprofils und des Versteifungsprofils erfolgt. In besonders vorteilhafter Weise ist das Steghohlprofil aus einer Leichtmetalllegierung, insbesondere einer Aluminiumlegierung, hergestellt und das Versteifungsprofil ist vorzugsweise aus einer Stahllegierung hergestellt. Das Versteifungsprofil kann aber auch aus anderen metallischen oder nichtmetallischen Werkstoffen hergestellt sein, die eine ausreichende Steifigkeit, auch bei hohen Temperaturdifferenzen, wie sie für den Einsatz von Kettenfahrzeugen möglich sind, gewährleisten. Eine Wandstärke des als Hohlprofil gestalteten Versteifungsprofiles kann individuell gewählt werden abhängig von den zu erzielenden Versteifungswerten für den in zusammengefügtem Zustand aus Steghohlprofil und Versteifungsprofil einen Hybridkettensteg bildenden, erfindungsgemäßen Kettensteg. Durch das kraftschlüssig in dem Steghohlprofil gehaltene Versteifungsprofil wird eine Biegesteifigkeit des Kettensteges insgesamt erheblich erhöht, ohne dass sich eine erhebliche Gewichtserhöhung im Hinblick auf einen Kettensteg ohne eingefügtes Versteifungsprofil ergibt.

Durch das erfindungsgemäße Verfahren werden die unterschiedlichen Materialausdehnungen bei unterschiedlichen Temperaturen genutzt. Das Aufheizen des Steghohlprofiles - bei einer Aluminiumlegierung auf etwa 60°C bis 80°C - und das Abkühlen des Versteifungsprofils, insbesondere mittels Trockeneis, führt zu einer Materialausdehnung des Steghohlprofiles einerseits und zu einer gewissen Schrumpfung des Versteifungsprofiles andererseits. Dadurch entsteht Spiel zwischen der Außenkontur des Versteifungsprofiles und der Innenkontur des Steghohlprofiles, das ein Einschieben oder Einziehen des Versteifungsprofiles in das Steghohlprofil, d. h. ein koaxiales Einstecken, ermöglicht. Eine anschließende gemeinsame Temperaturangleichung führt zwangsläufig zu einem Ausdehnen des Versteifungsprofiles und zu einem Schrumpfen des Steghohlprofiles, wodurch sich eine flächige Verpressung zwischen dem Steghohlprofil und dem Versteifungsprofil ergibt.

In Ausgestaltung des Verfahrens wird das Steghohlprofil auf eine Temperatur von wenigstens 60°C erhitzt und das Versteifungsprofil auf eine Temperatur von weniger als 5°C abgekühlt. Die beschriebenen Temperaturbereiche sind besonders vorteilhaft für ein Steghohlprofil aus einer Aluminiumlegierung und für ein Versteifungsprofil aus einer Stahllegierung geeignet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Ausschnitt einer Laufwerkskette eines Kettenfahrzeugs mit mehreren Kettenstegen, die nach einer erfindungsgemäßen Ausführungsform gestaltet sind,
- Fig. 2: in vergrößerter perspektivischer, teilweise aufgeschnittener Darstellung eine Ausführungsform eines erfindungsgemäßen Kettensteges für die Laufwerkskette gemäß Fig. 1,
- Fig. 3: in weiter vergrößerter Darstellung einen Ausschnitt des Kettensteges gemäß Fig. 2 und
- Fig. 4: einen Querschnitt durch den Kettensteg gemäß Fig. 3.

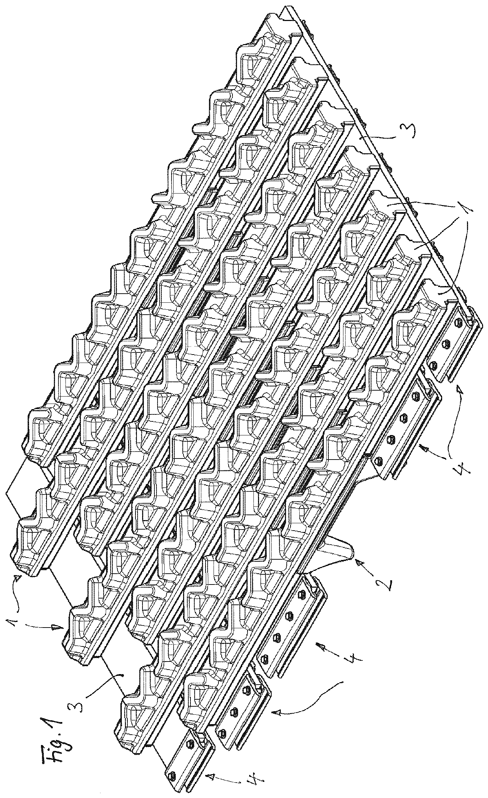

Eine Laufwerkskette eines Kettenlaufwerks eines Kettenfahrzeugs weist mehrere Kettenstege 1 gemäß Fig. 1 auf, die mit mehreren in Laufrichtung der Laufwerkskette verlaufenden Kettenbändern 3 verbunden sind. An jedem Kettensteg 1 ist jeweils ein Spurbügel 2 befestigt, der eine Führung des jeweiligen Kettensteges 1 und damit auch der Laufwerkskette entlang von Laufrädern, einem Triebrad sowie einem Spannrad des Kettenlaufwerks ermöglicht und damit Antriebskräfte eines Antriebsrades auf die Laufwerkskette überträgt. Anhand der Fig. 1 sind zudem mehrere Kettenschlösser 4 vorgesehen, mittels derer entsprechende Bandenden jedes Kettenbandes 3 zu einem endlos umlaufenden Kettenband miteinander verbunden werden.

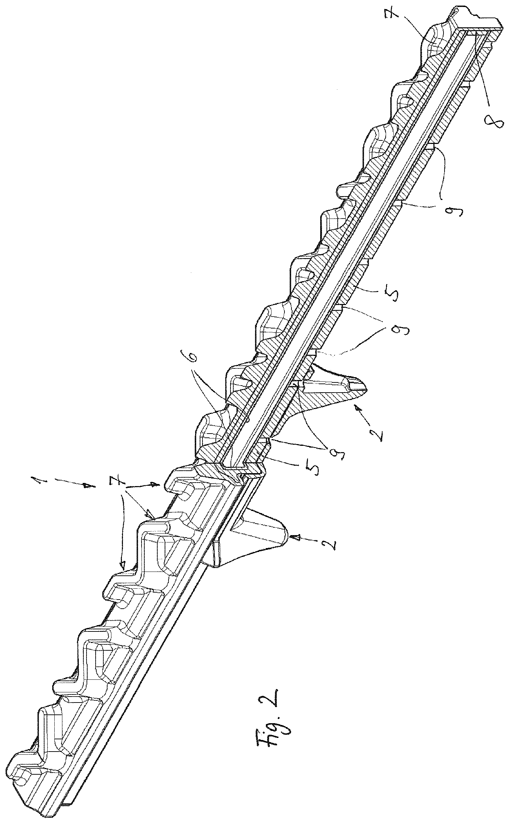

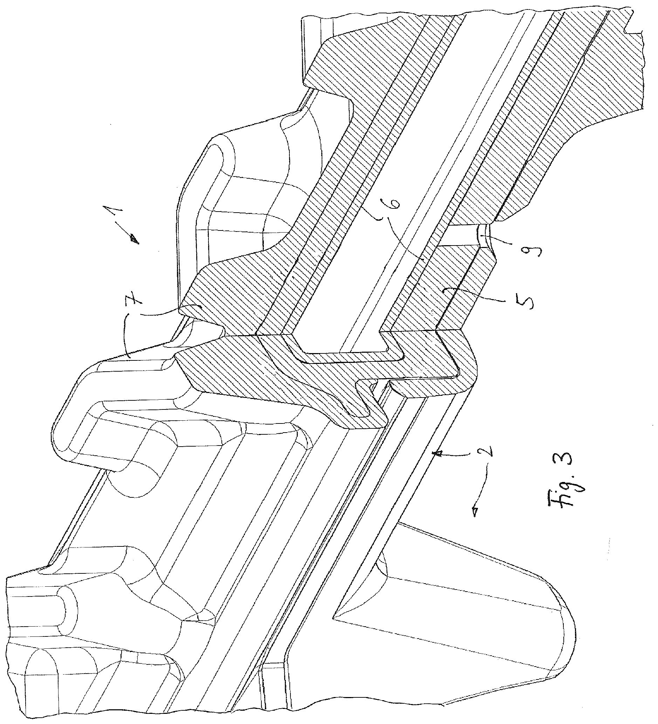

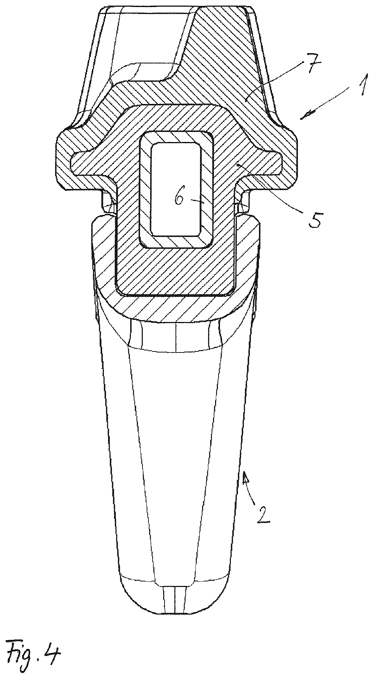

Die Kettenstege 1 sind identisch zueinander gestaltet. Anhand der Fig. 2 bis 4 wird einer der Kettenstege 1 nachfolgend näher beschrieben. Jeder Kettensteg 1 weist ein aus einer Aluminiumlegierung bestehendes Steghohlprofil 5 auf, das sich über eine gesamte Länge des jeweiligen Kettensteges 1 erstreckt. Auf eine Außenseite des Steghohlprofiles 5 aufvulkanisiert ist eine Gummiprofilierung 7. Die Gummiprofilierung 7 ist auf der Seite des Steghohlprofils 5 vorgesehen, das im Betrieb der Laufwerkskette auf einem Untergrund abrollt. Das Steghohlprofil 5 ist im Bereich seiner zu der Gummiprofilierung 7 gegenüberliegenden Seite mit mehreren, über die Länge des Steghohlprofils 5 verteilt angeordneten Befestigungsaufnahmen 9 versehen. Die Befestigungsaufnahmen 9 dienen zum einen zur Befestigung des Steghohlprofiles 5 und damit des Kettensteges 1 an den Kettenbändern 4. Zum anderen dienen die Befestigungsaufnahmen 9 in einem mittleren Bereich des längserstreckten Steghohlprofiles 5 dazu, den Spurbügel 2 an dem Steghohlprofil 5 zu befestigen. Der Spurbügel 2 weist hierzu ein U-förmiges Halteprofil auf, das eine der Gummiprofilierungen 7 gegenüberliegende Seite des Steghohlprofiles 5 in Kettenlaufrichtung formschlüssig umgreift (Fig. 4).

Das Steghohlprofil 5 weist einen über seine gesamte Länge durchgängigen Hohlraum auf, in dem ein Versteifungsprofil 6 aus einer Stahllegierung integriert ist. Das Versteifungsprofil 6 ist als vierkantförmiges Hohlprofil gestaltet, das im Bereich seiner gegenüberliegenden Stirnenden (Fig. 2) mit einem Abschlussdeckel 8 versehen ist. Die Abschlussdeckel 8 auf den gegenüberliegenden Stirnseiten dienen dazu, diese offenen Stirnseiten zu verschließen und insbesondere auch dazu, zu vermeiden, dass bei der Vulkanisierung der Gummiprofilierung 7 Gummimaterial in entsprechend offene Stirnseiten des Hohlprofiles des Versteifungsprofiles 6 eindringt.

Wie anhand der Fig. 4 erkennbar ist, sind der nicht näher bezeichnete Hohlraum des Steghohlprofiles 5 und das Versteifungsprofil 6 mit aufeinander abgestimmten, vierkantförmigen Querschnitten versehen. Das Versteifungsprofil 6 ist mit seiner Außenkontur weitgehend umlaufend flächig an eine Innenkontur des Hohlraumes des Steghohlprofiles 5 angepresst. Durch die Verpressung des Versteifungsprofiles 6 innerhalb des Steghohlprofiles 5 ergibt sich ein Hybridbauteil, wobei die hohe Steifigkeit des aus der Stahllegierung bestehenden Versteifungsprofiles 6 die Gesamtsteifigkeit des Steghohlprofiles 5 und damit das Widerstandsmoment und das Elastizitätsmodul des gesamten Kettensteges erhöhen.

Zur Integration des Versteifungsprofiles 6 in den Hohlraum des Steghohlprofiles 5 wird das aus der Aluminiumlegierung bestehende Steghohlprofil 5 auf eine Temperatur von etwa 60°C bis 80°C erhitzt, wohingegen das Versteifungsprofil 6 mit Hilfe von Trockeneis stark abgekühlt wird. Hierdurch ergibt sich eine gewisse Schrumpfung des Versteifungsprofiles 6. Gleichzeitig führt die Erhitzung des Steghohlprofiles 5 zu einer Ausdehnung und demzufolge Aufweitung des Steghohlprofiles 5 einschließlich seines Hohlraumes. Aufgrund dieser unterschiedlichen Temperaturbeaufschlagungen ist es möglich, das Versteifungsprofil 6 in eine offene Stirnseite des Hohlraumes des Steghohlprofiles 5 einzuschieben oder einzuziehen, wobei eine Länge des Versteifungsprofiles 6 und eine Länge des Steghohlprofiles 5 zueinander korrespondieren. Sobald das Versteifungsprofil 6 vollständig in den Hohlraum des Steghohlprofiles 5 eingesteckt ist, gleicht die zusammengefügte Bauteilkombination aus Steghohlprofil 5 und Versteifungsprofil 6 sich bei Raumtemperatur zwangsläufig aneinander an. Dabei dehnt sich das Versteifungsprofil 6 wieder geringfügig aus, während sich das Steghohlprofil 5 geringfügig zusammenzieht. Dies genügt, um aus einer Spiel- oder Übergangspassung zwischen der Außenkontur des Versteifungsprofiles 6 und der Innenkontur des Hohlraumes des Steghohlprofiles 5 während des Einsteckvorganges eine Presspassung zu bewirken, so dass die Außenkontur des Versteifungsprofiles 6 und die Innenkontur des Hohlraumes des Steghohlprofiles 5 flächig aneinander gepresst sind. Nach dieser Herstellung des Hybridbauteiles wird die Gummiprofilierung aufvulkanisiert und abschließend wird der Spurbügel 2 mit Hilfe von Schraubverbindungen an der der Gummiprofilierung 7 gegenüberliegenden Seite des Hybridbauteiles befestigt.

## Patentansprüche

1. Kettensteg (1) für ein Kettenfahrzeug, insbesondere eine Pistenraupe, mit einem Steghohlprofil (5), insbesondere aus einer Leichtmetalllegierung, das Befestigungsaufnahmen (9) zur Verbindung mit Kettenbändern (3) einer Laufwerkskette des Kettenfahrzeugs aufweist, wobei in dem Steghohlprofil (5) ein Versteifungsprofil (6), insbesondere aus einem von dem Steghohlprofil (5) abweichenden Material, integriert ist, **dadurch gekennzeichnet, dass** das Versteifungsprofil (6) eine auf eine Innenkontur des Steghohlprofiles (5) derart abgestimmte Außenkontur aufweist, dass das Versteifungsprofil (6) mit seiner Außenkontur zumindest weitgehend flächig an der Innenkontur des Steghohlprofiles (5) anliegt, und dass das Versteifungsprofil (6) mit dem Steghohlprofil (5) verpresst ist.

2. Kettensteg (1) nach Anspruch 1, **dadurch gekennzeichnet, dass** das Versteifungsprofil (6) sich über eine gesamte Länge des Steghohlprofiles (5) erstreckt.

3. Kettensteg (1) nach einem der vorhergehenden Ansprüche, **dadurch gekennzeichnet, dass** das Versteifungsprofil (6) als Hohlprofil, vorzugsweise aus einer Stahllegierung, hergestellt ist.

4. Kettensteg (1) nach einem der vorhergehenden Ansprüche, **dadurch gekennzeichnet, dass** ein Querschnitt des Versteifungsprofils (6) und ein Querschnitt des Steghohlprofils (5) jeweils vierkantförmig ausgeführt sind.

5. Kettensteg (1) nach einem der vorhergehenden Ansprüche, **dadurch gekennzeichnet, dass** das Steghohlprofil (5) außenseitig mit einer Profilierung (7) aus einem elastisch nachgiebigen Werkstoff, insbesondere einem Elastomer oder einem thermoplastischen Elastomer, versehen ist.

6. Verfahren zur Herstellung eines Kettenstegs (1) nach einem der vorhergehenden Ansprüche, **dadurch gekennzeichnet, dass** ein Steghohlprofil (5) erhitzt und ein Versteifungsprofil (6) abgekühlt werden, und dass anschließend das gekühlte Versteifungsprofil (6) axial in das erhitzte Steghohlprofil (5) eingesteckt wird, wobei abschließend eine gemeinsame Temperaturangleichung des Steghohlprofils (5) und des Versteifungsprofils (6) erfolgt.

7. Verfahren nach Anspruch 6, **dadurch gekennzeichnet, dass** das Steghohlprofil (5) auf eine Temperatur von wenigstens 60°C erhitzt und das Versteifungsprofil (6) auf eine Temperatur von weniger als 5°C abgekühlt wird.

8. Verfahren nach Anspruch 7, **dadurch gekennzeichnet, dass** die Abkühlung des Versteifungsprofils (6) durch den Einsatz von Trockeneis erfolgt.

## Claims

1. A track cleat (1) for a tracked vehicle, in particular for a snow groomer, having a hollow cleat section (5), in particular made of a light metal alloy and having fastening receptacles (9) for connection to track belts (3) of a track chain of the tracked vehicle, wherein a reinforcing section (6), in particular made of a material different from that of the hollow cleat section (5), is integrated in the hollow cleat section (5), **characterized in that** the reinforcing section (6) has an outer contour matched to an inner contour of the hollow cleat section (5) such that the outer contour of the reinforcing section (6) is at least largely in surface contact with the inner contour of the hollow cleat section (5), and **in that** the reinforcing section (6) is in pressure contact with the hollow cleat section (5).

2. The track cleat (1) according to claim 1, **characterized in that** the reinforcing section (6) extends over a full length of the hollow cleat section (5).

3. The track cleat (1) according to any of the preceding claims, **characterized in that** the reinforcing section (6) is manufactured as a hollow section, preferably made of a steel alloy.

4. The track cleat (1) according to any of the preceding claims, **characterized in that** a cross-section of the reinforcing section (6) and a cross-section of the hollow cleat section (5) are each designed square-shaped.

5. The track cleat (1) according to any of the preceding claims, **characterized in that** the hollow cleat section (5) is provided on the outside with a profile (7) made of an elastically flexible material, in particular of an elastomer or thermoplastic elastomer.

6. A method for manufacturing a track cleat (1) according to any of the preceding claims, **characterized in that** a hollow cleat section (5) is heated and a reinforcing section (6) is cooled, and **in that** the cooled reinforcing section (6) is then inserted axially into the heated hollow cleat section (5), wherein finally a joint temperature equalization of the hollow cleat section (5) and of the reinforcing section (6) takes place.

7. The method according to claim 6, **characterized in that** the hollow cleat section (5) is heated to a temperature of at least 60°C and the reinforcing section (6) is cooled to a temperature of less than 5°C.

8. The method according to claim 7, **characterized in that** the reinforcing section (6) is cooled by the use of dry ice.

## Revendications

1. Étançon (1) pour un véhicule à chenilles, en particulier une dameuse, avec un profilé creux (5), en particulier en alliage métallique léger, qui présente des logements de fixation (9) pour la liaison avec des bandes de chaîne (3) d'une chaîne de chenille du véhicule à chenilles, un profilé de renforcement (6), en particulier en un matériau différent du profilé creux (5), étant intégré dans le profilé creux (5), **caractérisé en ce que** le profilé de renforcement (6) présente un contour extérieur adapté à un contour intérieur du profilé creux (5) de telle sorte que le profilé de renforcement (6) s'applique avec son contour extérieur au moins en grande partie à plat contre le contour intérieur du profilé creux (5), et **en ce que** le profilé de renforcement (6) est embouti avec le profilé creux (5).

2. Étançon (1) selon la revendication 1, **caractérisé en ce que** le profilé de renforcement (6) s'étend sur toute une longueur du profilé creux (5).

3. Étançon (1) selon l'une des revendications précédentes, **caractérisé en ce que** le profilé de renforcement (6) est fabriqué sous forme de profilé creux, de préférence en alliage d'acier.

4. Étançon (1) selon l'une des revendications précédentes, **caractérisé en ce qu'**une section transversale du profilé de renforcement (6) et une section transversale du profilé creux (5) sont chacune en forme de carré.

5. Étançon (1) selon l'une des revendications précédentes, **caractérisé en ce que** le profilé creux (5) est pourvu, côté extérieur, d'un profilage (7) en un matériau élastiquement flexible, en particulier un élastomère ou un élastomère thermoplastique.

6. Procédé de fabrication d'un étançon (1) selon l'une des revendications précédentes, **caractérisé en ce qu'**un profilé creux (5) est chauffé et un profilé de renforcement (6) est refroidi, et **en ce qu'**ensuite le profilé de renforcement (6) refroidi est inséré axialement dans le profilé creux (5) chauffé, sachant qu'un ajustement commun de la température du profilé creux (5) et du profilé de renforcement (6) est finalement réalisé.

7. Procédé selon la revendication 6, **caractérisé en ce que** le profilé creux (5) est chauffé à une température d'au moins 60 °C et le profilé de renforcement (6) est refroidi à une température inférieure à 5 °C.

8. Procédé selon la revendication 7, **caractérisé en ce que** le refroidissement du profilé de renforcement (6) est réalisé par l'utilisation de glace carbonique.
